# EUROPÄISCHE PATENTSCHRIFT

(11) **EP 3 207 177 B1**
(45) Veröffentlichungstag und Bekanntmachung des Hinweises auf die Patenterteilung: **28.07.2021**
(21) Anmeldenummer: 15775748.5
(22) Anmeldetag: 12.10.2015
(51) Int. Cl.: D21F 7/08, D21F 1/00, B65G 15/32, B32B 5/02, B32B 5/18, B32B 5/22, B32B 5/26, B32B 5/24, B32B 5/32, E04B 1/68

(54) **BAND UND VERFAHREN ZUR HERSTELLUNG EINES BANDES**
BELT AND METHOD FOR PRODUCING A BELT
BANDE ET PROCÉDÉ DE PRODUCTION D'UNE BANDE

(30) Priorität: 15.10.2014 DE 102014220828
(43) Veröffentlichungstag der Anmeldung: 23.08.2017
(73) Patentinhaber: Voith Patent GmbH, 89522 Heidenheim (DE)
(72) Erfinder: EBERHARDT, Robert, 73479 Ellwangen (DE)
(74) Vertreter: Voith Patent GmbH - Patentabteilung
(86) Internationale Anmeldenummer: PCT/EP2015/073524
(87) Internationale Veröffentlichungsnummer: WO 2016/058972

(56) Entgegenhaltungen:
- WO-A1-88/07929
- WO-A1-2005/075733
- WO-A1-2015/090797
- US-A- 4 830 905

## Beschreibung

Die Erfindung betrifft ein funktionales Band gemäß dem Oberbegriff von Anspruch 1 sowie ein Verfahren zur Herstellung eines funktionalen Bandes gemäß dem Oberbegriff von Anspruch 11 und die Verwendung eines solchen funktionalen Bandes als technisches Textil.

In vielen industriellen und technischen Anwendungen werden bandförmige Strukturen eingesetzt, welche eine Lage eines geschäumten Materials, speziell eines Weichschaums umfassen, und bei denen dieses geschäumte Material mit einer weiteren Lage beispielsweise einem Trägergewebe oder einer Polymerfolie verbunden ist.

Das Spektrum der Anwendungen dieser Bänder ist extreme breit. Es kann sich dabei um Bespannungen für Papiermaschinen handeln, bei denen eine poröse Schaumlage Wasser aus dem Papier aufnehmen und ableiten soll, während das mit ihr verbundene Trägergewebe die mechanische Festigkeit und die Abriebbeständigkeit liefert.

Weitere Anwendungsbeispiele für solche funktionalen Bänder sind Transportbänder für empfindliche Güter, oder auch trägerstabilisierte Kompressions- und Dichtbänder sowie flexible textilbewehrte Dämmmaterialien zur Schall- oder Wärmedämmung.

Aus dem Stand der Technik sind einige Verfahren zur Herstellung solcher Bänder bekannt. Einen guten Überblick darüber gibt die WO 2005/075733 A1

Eine bekannte Möglichkeit ist das Vernadeln der Schaumlage, beispielsweise auf einem Trägergewebe. Nachteilig ist daran jedoch, dass bei diesem Verfahren die Struktur der Schaumlage, und damit ihre Eigenschaften wie Porosität der auch Kompressibilität massiv geschädigt werden. Zudem ist das Verfahren für viele Trägerlagen, wie z.B. Folien nicht anwendbar.

Eine weitere bekannte Möglichkeit zum Herstellen solcher Bänder ist das Auflaminieren. Dabei werden die beiden Lagen unter Druck und Temperatur miteinander verbunden. Dabei wird die Verbindung der beiden Lagen durch Verschmelzen der Oberflächen erzielt. Jedoch wird hierzu zumindest eine der Lagen durchgängig erhitzt, um die Kontaktfläche beider Lagen auf die notwendige Schmelztemperatur zu erhitzen. Dadurch kann es bei vielen Materialien zu einer Schädigung der Materialeigenschaften kommen. So wird beim Auflaminieren einer Schaumlage diese beispielsweise auch kompaktiert und zwar häufig weit über das technisch gewünschte Maß hinaus.

Eine dritte Methode zum Aufbringen einer Schaumlage auf eine weitere funktionelle Lage ist das Verkleben der beiden Lagen. Dies wird ebenfalls in der WO 2005/075733 A1 beschrieben. Nachteilig daran ist jedoch, dass beim Auftragen des Klebstoffs auf die Schaumlage große Teile des Klebstoffs in die Poren der Schaumlage eindringen und diese Verstopfen. Dies führt in der Regel zu einer nicht kontrollierbaren Verschlechterung der Porosität der Schaumlagen. Ein weiterer Nachteil des Verklebens ist es, dass sich die Klebeverbindung z.B. bei Schmelzklebevliesen in feuchten oder chemisch aggressiven Umgebungen stellenweise wieder lösen, was zu Delamination des Bandes führen kann.

Schließlich beschreibt die WO 2005/075733 A1 noch das Verschweißen der Lagen mittels Ultraschallschweißens. Dieses Fügeverfahren lässt sich jedoch nur zum Fügen von thermoplastischen Kunststoffen und metallischen Werkstoffen verwenden. In vielen Anwendungen handelt es sich bei den Schaumlagen jedoch um elastische Materialien wie z.B. Polyurethanschäume, so dass dieses Verfahren hier nicht angewendet werden kann.

Aufgabe der Erfindung ist es daher ein Verfahren bzw. ein Band zur Verfügung zu stellen, dass die Schwächen des Standes der Technik überwindet

Die Aufgabe wird vollständig gelöst durch ein funktionales Band gemäß dem kennzeichnenden Teil des Anspruchs 1, durch ein Verfahren gemäß dem kennzeichnenden Teil des Anspruchs 11 sowie durch die Verwendung eines funktionalen Bands als technisches Textil gemäß Anspruch 15.

Vorteilhafte Ausführungen und Weiterbildungen sind in den Unteransprüchen angegeben.

Die Erfindung geht von der Überlegung aus, ein funktionales Band zur Verfügung zu stellen, bei dem mindestens eine Schaumlage mit einer weiteren funktionellen Lage verbunden ist, wobei die Verbindung die Nachteile des Standes der Technik überwinden soll. Insbesondere soll die Verbindung die gewünschten Eigenschaften der Schaumlage nicht stark beeinträchtigt. Trotzdem soll die Verbindung der beiden Lagen sehr fest sein, und sich weder in feuchtem noch in chemisch aggressivem Umfeld auch unter mechanischer Belastung nicht lösen.

Unter einem funktionalen Band soll dabei im Folgenden ein bandförmiges Flächengebilde verstanden werden, welches in technischen oder industriellen Anwendungen funktionell, das heißt nicht nur rein dekorativ eingesetzt werden kann. Das Anwendungsspektrum kann dabei den Einsatz in Papiermaschinenbespannungen, in Transport-, Kompressions-, Dämm- oder Dichtbänder und viele weitere Anwendungen umfassen.

Das erfindungsgemäße funktionale Band hat eine Längen- und einer Breitenrichtung - wobei die Längenausdehnung größer ist, als die Breitenausdehnung. Es umfasst mindestens eine Schaumlage und zumindest eine weitere funktionelle Lage. Diese weitere funktionelle Lage kann je nach Einsatzweck beispielsweise die mechanische Festigkeit des funktionalen Bandes ganz oder teilweise gewährleisten, gewünschte Oberflächeneigenschaften aufweisen oder die Weiterverarbeitung des Bandes erleichtern.

Die Verbindung der Schaumlage erfolgt erfindungsgemäß mittels Lasertransmissionsschweißen. Beim Lasertransmissionsschweißen handelt es sich um einen einstufigen Prozess, bei dem die Erwärmung des Kunststoffes und der Fügevorgang nahezu gleichzeitig ablaufen. Dabei muss ein Fügepartner im Bereich der Laserwellenlänge einen hohen Transmissionsgrad und der andere einen hohen Absorptionsgrad aufweisen. Der transparente Fügepartner wird vom Laserstrahl ohne nennenswerte Erwärmung durchstrahlt. Erst im zweiten Fügepartner wird der Laserstrahl in einer oberflächennahen Schicht verstärkt absorbiert, wobei die Laserenergie in Wärmeenergie umgewandelt und der Kunststoff aufgeschmolzen wird. Aufgrund von Wärmeleitungsprozessen wird auch das transparente Bauteil im Bereich der Fügezone plastifiziert [nach 'Wikipedia']. So kommt es zu einer stoffschlüssigen Verbindung. Die so erzeugte Verbindung ist sehr stabil und wird auch durch längeren Kontakt mit einer wässrigen Umgebung nicht merklich geschwächt.
Der Vorteil dieses Schweißverfahre liegt zum einen darin, dass die Schaumlage und die weitere funktionelle Lage nur an den Stellen miteinander verbunden werden, an denen sie auch schon vor dem Verschweißen in Kontakt standen. So wird der beispielsweise beim Verkleben auftretende nachteilige Effekt vermieden, dass Poren der Schaumlage durch Klebstoff oder andere Materialien verstopft werden, wodurch sich die Porosität der Schaumlage nachteilig verändert. Zum anderen wird auch der Nachteil des Laminierverfahrens überwunden, da lediglich die oberflächennahen Bereiche der beiden Lagen einer größeren Hitze ausgesetzt werden, aber nicht die ganze Lage durcherhitzt werden muss.
Bei einer vorteilhaften Ausführung erfolgt das Schweißen durch NIR Lasertransmissionsschweißen. Dabei werden Laser mit einer Wellenlänge im Bereich des nahen Infrarotlichts eingesetzt, also mit Wellenlängen von 780nm-1100nm.

Zudem kann in einer vorteilhaften Ausführung der Erfindung kann das funktionale Band noch eine weitere Lage aufweisen, beispielsweise Stapelvlieslage, welche z.B. ebenfalls mittels Lasertransmissionsschweißen an der zweiten Oberfläche der Schaumlage befestigt wird

In einer vorteilhaften Ausführung der Erfindung umfasst die Schaumlage einen Polymerschaum oder besteht daraus. In einer besonders vorteilhaften Ausführung handelt es sich bei dem Polymer um ein Elastomer, insbesondere um ein Polyurethan. Ein Vorteil von Polyurethanweichschäumen, besteht in ihren elastischen Eigenschaften. Sie weisen nach einer Kompression ein gutes Rückstellvermögen auf.

Dies ist besonders von Vorteil, wenn das funktionale Band in Anwendungen wie z.B. in Pressfilzen für eine Papiermaschine zum Einsatz kommt, wo das funktionale Band und insbesondere die Schaumlage in jedem Nipdurchlauf komprimiert wird, und danach wieder weitgehend auf seine ursprüngliche Dicke expandieren soll. Jedoch sind auch andere Polymerschäume erfindungsgemäß möglich, wie beispielsweise auf Polyether oder Polyester basierende Weichschäume.

Die Schaumlage umfasst in einer vorteilhaften Ausführung einen überwiegend offenporigen Polymerschaum. In einer anderen vorteilhaften Ausführung kann, sofern nicht oder wenig permeable funktionale Bänder erzielt werden sollen, die Schaumlage einen überwiegend geschlossenzelligen Polymerschaum umfassen, oder auch eine Kombination von beiden.

Die zumindest eine weitere funktionelle Lage umfasst in einer vorteilhaften Ausführung der Erfindung aus einem Gewebe, einem Gewirke, einem Gelege, einem Vlies, einer Folie oder einem Polymerschaum oder besteht daraus.

In einer vorteilhaften Ausführung ist entweder die Schaumlage oder die weitere funktionelle Lage als für Licht im Bereich der Laserwellenlänge weitgehend transparente Lage ausgeführt. Die die jeweils andere Lage ist zumindest an einer Oberfläche für Licht im Bereich der Laserwellenlänge als weitgehend absorbierende Lage ausgeführt.

Häufig eingesetzte Laserquellen sind Hochleistungsdiodenlaser (HDL, λ = 900-1100 nm) und Festkörperlaser (Faserlaser, Nd:YAG-Laser, λ = 1060-1090 nm).Da nahezu alle naturfarbenen und unverstärkten Thermoplaste wie z.B.PET, PBT, PA6, PA6.6, PA6.10, Polyurethane, Copolyamide, PPS oder Polyketone in diesem Wellenlängenbereich einen hohen Transmissionsgrad aufweisen können diese Materialien für die transparente Lage verwendet werden.

In einer weiteren vorteilhaften Ausführung umfasst die absorbierende Lage einen Absorber. Dieser Absorber absorbiert das Licht im Bereich der Laserwellenlänge. Beispiele für solche Absorber sind Rußpartikel, Farbstoff, Tinte oder ähnliches.

Dieser Absorber ist in weiteren vorteilhaften Ausführungen in das Volumen der absorbierenden Lage oder auf zumindest eine Oberfläche der absorbierenden Lage ein- bzw. aufgebracht.

In weiteren vorteilhaften Ausführungsformen ist das funktionale Band als Rollenware, als endlose Schlaufe oder mit einer verschließbaren Naht ausgeführt.

In einer besonders bevorzugten Ausführung ist die Schaumlage flächig aus mehreren einzelnen Schaumelementen gebildet oder umfasst diese. Die Schaumelemente sind dabei in einigen vorteilhaften Varianten als rechteckige Platten bereitgestellt. Die Schaumelemente werden in vielen Anwendungen in Längenrichtung und/oder Breitenrichtung auf Stoß nebeneinander angeordnet

Ein weiterer unabhängiger Aspekt der Erfindung betrifft ein Verfahren zur Herstellung eines funktionalen Bandes. Das erfindungsgemäße Verfahren weist dabei die folgenden Prozessschritte auf:
a) Bereitstellen einer kompressiblen Schaumlage
b) Bereitstellen einer weiteren funktionellen Lage
c) Zusammenführen der Schaumlage und der weiteren funktionellen Lage
d) Verbinden der kompressiblen Schaumlage mit der weiteren funktionellen Lage durch Lasertransmissionsschweißen, insbesondere mittels NIR Lasertransmissionsschweißen.

Das Verbinden der beiden Lagen durch Schweißen hat den großen Vorteil, dass die Schaumlage und die weitere funktionelle Lage nur an den Kontaktstellen miteinander verbunden werden. Im Gegensatz zum Verkleben, bei dem Klebstoff in die Poren der Schaumlage eindringt und deren Eigenschaften unkontrollierbar verändert, z.B. die Porosität erniedrigt, bleiben hier die Porenstrukturen der Schaumlage unverändert. Das Lasertransmissionsschweißen, insbesondere das NIR Lasertransmissionsschweißen ist dabei für die Verbindung von Kunststoffen besonders geeignet. Es wirkt gezielt nur auf die Oberfläche, bzw. die Grenzfläche der beiden Lagen ein. Andere Schweißverfahren, wie beispielsweise das Ultraschallschweißen können bei diesen Materialien nicht eingesetzt werden.

Zudem ist die Schweißverbindung sehr dauerhaft, auch in feuchter oder chemisch aggressiver Umgebung.

In einer besonders vorteilhaften Ausführung des Verfahrens ist entweder die Schaumlage oder die weitere funktionelle Lage als für Licht im Bereich der Laserwellenlänge weitgehend transparente Lage ausgeführt, während die jeweils andere Lage zumindest an einer Oberfläche für Licht im Bereich der Laserwellenlänge weitgehend absorbierend ausgeführt ist. Das Laserlicht dringt dabei durch die transparente Lage hindurch weitgehend ungehindert zur Grenzfläche der beiden Lagen vor. An der Grenzfläche wird das Licht durch die Oberfläche der absorbierenden Lage absorbiert. Dadurch heizt sich die Grenzfläche auf, wodurch das Verschweißen der beiden Lagen möglich wird.

Es ist erfindungsgemäß auch vorgesehen, dass mehr als zwei Lagen miteinander verbunden werden. So können beispielsweise drei Lagen durch Lasertransmissionsschweißen miteinander verbunden werden, indem eine mittlere Lage zumindest an ihren beiden Oberflächen für Licht im Bereich der Laserwellenlänge weitgehend absorbierend ausgeführt ist, während eine obere und eine untere Lage als für Licht im Bereich der Laserwellenlänge weitgehend transparente Lagen ausgeführt sind. Der Schweißvorgang erfolgt dann wie oben beschrieben, wobei das Laserlicht einmal durch die obere Lage bis zu deren Grenzfläche mit der mittleren Lage durchdringt, und in einem zweiten gleichzeitigen oder späteren Prozess das Laserlicht durch die untere Lage bis zu deren Grenzfläche mit der mittleren Lage durchdringt. In einer vorteilhaften Ausführung kann diese mittlere Lage als eine Schaumlage ausgeführt sein, oder als weitere funktionelle Lage.

In einer weiteren bevorzugten Ausführung des Verfahrens werden die zumindest zwei Lagen unter einem Fügedruck aufeinandergelegt und miteinander verschweißt. Dieser Fügedruck kann beispielsweise im Bereich zwischen 1 N/cm² und 10 N/cm² liegen. Der Fügedruck kann in einer vorteilhaften Ausführung des Verfahrens dadurch aufgebracht werden, dass die Schaumlage und die mindestens eine weitere funktionelle Lage gemeinsam gegen eine feste Fläche, eine feste Walze oder ähnliches gedrückt werden. Der Fügedruck kann beispielsweise dadurch aufgebracht werden, dass der Laser mit einer Rollenoptik ausgestattet ist, und mittels dieser Rollenoptik auf die Lagen drückt. Alternativ dazu oder auch zusätzlich dazu kann ein Fügedruck auch dadurch aufgebaut werden, dass die Lagen unter einer Zugspannung über eine Walze geführt werden, wodurch ein Anpressdruck an die Walze erzeugt wird. In einer solchen Ausführung des Verfahrens erfolgt das Verschweißen über dieser Walze. Ein Fügedruck kann auch dadurch aufgebaut werden, dass die Lagen über ein statisches oder rotierendes Element geführt werden, welches in das Band eingedrückt wird.

Durch das Verschweißen unter Fügedruck kommt es in vielen Ausführungen des Verfahrens zu einer leichten Kompaktierung der Schaumlage. So beträgt die Dicke der Schaumlage nach dem Verschweißen häufig zwischen 90%-100% der Ursprungsdicke.
In einer besonders bevorzugten Ausführung weist das erfindungsgemäße Verfahren einen weiteren Prozessschritt auf, in dem die Schaumlage unter Einfluss von Druck und Temperatur zumindest teilweise kompaktiert wird. Dieses Kompaktieren kann dabei vor und/oder nach dem Verschweißen erfolgen kann. Beispielsweise bei der Herstellung von funktionalen Bändern für den Einsatz in Papier- oder Zellstoffmaschinen, insbesondere von Pressfilzen, können kommerziell erhältliche Schaumlagen verwendet werden, die häufig eine Dicke von 10-20mm aufweisen. Diese sind nicht nur für das herzustellende Produkt zu dick, sondern haben oftmals auch eine zu hohe Porosität und Porengröße. Dies kann beides durch die Kompaktierung verbessert bzw. geändert werden. Häufig werden die Schaumlagen auf eine Dicke von 1mm - 5mm kompaktiert. Je nach Anwendung sind jedoch auch andere Dicken möglich.
In einer ganz besonders vorteilhaften Ausführung des Verfahrens wird die Schaumlage nach einem Kompaktierschritt unter Druck abgekühlt. Vorzugsweise wird dabei der beim Kompaktieren aufgebrachte Druck weitgehend aufrechterhalten. Für das Abkühlen kann eine spezielle Kühlvorrichtung vorgesehen sein. Durch das Abkühlen unter Druck wird eine Rückexpansion der komprimierten Schaumlage verhindert. Somit ist es möglich, die Schaumlage gleichmäßig auf eine Zieldicke zu kompaktieren.
Die Permeabilität der funktionalen Bänder ist vorzugsweise kleiner als ca. 500 cfm (entspricht 0.23 m³/s) besonders bevorzugt kleiner als ca. 200 cfm (entspricht 0.09 m³/s)

In einer vorteilhaften Ausgestaltung des Verfahrens werden die Schaumlage und die weitere funktionelle Lage jeweils als eine bahnförmige Lage bereitgestellt, wobei die beiden bahnförmigen Lagen dieselbe Breite aufweisen. Jedoch kann in anderen Ausführungen auch vorgesehen sein, dass eine Lage, vorzugsweise die Schaumlage in Form von mehreren einzelnen Schaumelementen bereitgestellt wird bzw. aus diesen Schaumelementen gebildet wird. Diese einzelnen Elemente können dann nebeneinander und/oder hintereinander vorzugsweise auf Stoß angeordnet werden. So ist es beispielsweise möglich, dass die Schaumlage aus mehreren Schaumelementen in Form von schmalen bahnförmigen Lagen bereitgestellt wird, die nebeneinander angeordnet werden, und deren Gesamtbreite im Wesentlichen die Breite der weiteren funktionellen Lage entspricht. In einer anderen Ausführung des Verfahrens kann die Schaumlage aus mehreren Schaumelementen bereitgestellt werden, wobei die Schaumelemente im Wesentlichen dieselbe Breite haben, wie die weitere funktionelle Lage, jedoch deutlich kürzer sind. Diese Schaumelemente können dann auf der funktionellen Lage hintereinander angeordnet werden, bis die gewünschte Länge des funktionalen Bandes erreicht ist.
Im Übrigen kann es vorteilhaft sein, während der Verarbeitung der Schaumelemente bzw. während des Herstellungsprozesses des funktionalen Bandes die Schaumelemente temporär zu verkleben, und beispielsweise das Handling zu vereinfachen.. Hierzu kann beispielsweise ein wasserlösliches Klebemittel verwendet werden, welches nach Fertigstellung des Funktionalen Bandes, speziell nach dem Verschweißen mit NIR Lasertransmissionsschweißen wieder ausgewaschen wird, und dadurch keinen Einfluss auf die Eigenschaften des funktionalen Bandes hat.

Schließlich betrifft ein weiterer unabhängiger Aspekt der Erfindung die Verwendung eines funktionalen Bandes gemäß einem Aspekt der Erfindung als technisches Textil, insbesondere eine Bespannung zur Verwendung in einer Maschine zur Herstellung oder Verarbeitung einer Faserstoffbahn - vorzugsweise ein Pressfilz einer Papiermaschine - ein Dichtband oder ein textilbewehrtes Dämmmaterial. Diese technischen Textilien sind dadurch gekennzeichnet, dass sie ein funktionales Band gemäß einem der Ansprüche 1 bis 10 umfassen oder daraus bestehen. Ein solches erfindungsgemäßes technisches Textil kann insbesondere noch weitere textile Lagen und/oder Lagen aus Stapelfasern- auf der Ober- und /oder Unterseite des funktionalen Bandes umfassen. In einer vorteilhaften Ausführung des technischen Textils als Bespannung einer Papiermaschine kann vorgesehen sein, dass auf die Schaumlage des funktionalen Bandes eine Vlieslage mittels Laserschweißen oder auch mittels Auflaminieren angebracht ist. Beim Auflaminieren kann beispielsweise ein Schmelzkleber zum Verbinden der Vlieslage mit der Schmaumlage Einsatz kommen. In einer besonders bevorzugten Ausführung kann die Bespannung neben dem funktionalen Band und der aufgebrachten Vlieslage noch weitere Lagen, insbesondere weitere Vlieslagen umfassen.

Die Verwendung eines erfindungsgemäßen funktionalen Bandes als technisches Textil, oder als wichtiger Bestandteil eines solchen kann auf verschiedene Arten geschehen. So kann beispielsweise eine vorteilhafte Ausführung eines Pressfilzes derart sein, dass der Filz eine Tragstruktur und auf einer Seite oder auf beiden Seiten aufgenadelte Vlieslagen umfasst. In diesem Fall sind mit der Tragstruktur sowie der Vlieslage oder den Vlieslagen mehrere weiter funktionelle Lagen vorgesehen. Weiterhin kann papierseitig eine Schaumlage, insbesondere eine elastische offenporige Schaumlage vorgesehen sein, welche erfindungsgemäß durch Laser Transmissionsschweißen mit der papierseitigen Vlieslage verbunden wird. Dazu ist der Schaum vorteilhafterweise als zumindest an seiner Oberfläche für Licht im Bereich der Laserwellenlänge weitgehend absorbierende Lage ausgeführt. Das Laserlicht kann bei der Herstellung beispielsweise unter Fügedruck aus Richtung der Laufseite durch die Filzstruktur gelenkt werden. In diesem Fall können die Tragstruktur sowie die Vlieslage bzw. Vlieslagen für Licht im Bereich der Laserwellenlänge weitgehend transparent ausgeführt sein.

Ein solches funktionales Band hätte bei einer Verwendung als Pressfilz an seiner papierberührenden Oberfläche eine Schaumlage. Generell können Filze mit einer solchen Schaumlage als papierberührenden Oberfläche vorteilhaft sein, da diese eine geringe Markierungsneigung aufweisen, da im Gegensatz zu papierberührenden Vlieslagen keine Vliesfasern in die Papieroberfläche eingedrückt werden können. Zudem können trotz der vergleichsweise glatten Oberfläche der Schaumlagen bei der Verwendung entsprechende Schäume hohe Permeabilitäten erzielt werden. Dies kann für die Entwässerung der Papierbahn von großem Vorteil sein.
Um die Schaumlage zu kompaktieren und zu verfestigen kann vorgesehen sein, dass ein Pressfilz wie beispielsweise der oben beschriebene insbesondere nach dem Verschweißen der Schaumlage mit der papierseitigen Vlieslage über eine heiße Walze geführt wird. Eine solche Walze wird vorzugsweise bei Temperaturen zwischen 100°C und 250°C betrieben, besonders bevorzugt zwischen 160° C und 210°C. Durch diese Behandlung wird die Oberfläche der Schaumlage auch geglättet.

Als Schaum für einen derartigen Filz, aber auch für andere, erfindungsgemäße funktionale Bänder können bevorzugt offenporige Polyurethan Weichschäume bzw. Filterschäume zum Einsatz kommen mit einer Porosität von beispielsweise 30-60 PPI und einer Dicke von 2 bis 12mm, insbesondere 3-8 mm. Diese Dicke kann gegebenenfalls durch einen Kompaktierungsprozess noch reduziert werden, so dass die Schaumlage im fertigen Produkt eine geringere Dicke aufweist.

In einer weiteren vorteilhaften Ausführung kann wieder ein funktionales Band mit mehreren weiteren funktionellen Lagen vorgesehen sein. So kann beispielsweise eine Tragstruktur vorgesehen sein, auf deren papierseitiger Oberfläche eine oder mehrere Vlieslagen vorzugsweise durch Vernadelung angebracht sind. Auf der Oberfläche der obersten Vlieslage kann nun wiederum eine Schaumlage durch Transmissionsschweißen befestigt sein. Dabei ist vorzugsweise die Schaumlage für Licht im Bereich der Laserwellenlänge weitgehend absorbierend ausgeführt. Falls im Anwendungsfall keine papierberührende Schaumlage gewünscht ist, kann auf der papierseitigen Oberfläche der Schaumlage eine Vlieslage als weitere funktionelle Lage vorgesehen sein, welche dann die papierberührende Oberseite des Filzes bereitstellt. Diese Vlieslage kann entweder konventionell durch Vernadelung befestigt werden. In besonders vorteilhaften Ausführungen kann diese papierberührende Vlieslage allerdings auch wieder mittels Lasertransmissionsschweißen auf der Schaumlage befestigt sein. In dieser Ausführung werden dann also auf beiden Seiten der Schaumlage Vlieslagen durch Schweißen befestigt. Dies ist möglich, wenn die weiteren funktionellen Lagen für Licht im Bereich der Laserwellenlänge weitgehend transparent ausgeführt sind, während die Schaumlage in diesem Bereich absorbierend ausgeführt ist.
Auch bei dieser Ausführung kann die Schaumlage wieder durch Wärme und Druck kompaktiert und verfestigt werden, wobei dieses Kompaktieren vor und/oder nach dem ersten und/oder zweiten Verschweißen erfolgen kann

Im Folgenden wird die Erfindung beispielhaft anhand von schematischen, nicht maßstäblichen Figuren näher beschrieben.
Figur 1 zeigt einen Ausschnitt aus einer Ausführung des erfindungsgemäßen Verfahrens.
Figur 2 zeigt einen Ausschnitt aus einer weiteren Ausführung des erfindungsgemäßen Verfahrens.
Figur 2b zeigt schematisch das Konfektionieren einer Schaumlage an einer Stoßstelle.
Die Figuren 3a und 3b zeigen zwei Ausführungen der Verwendung eines erfindungsgemäßen funktionalen Bandes als Pressfilz

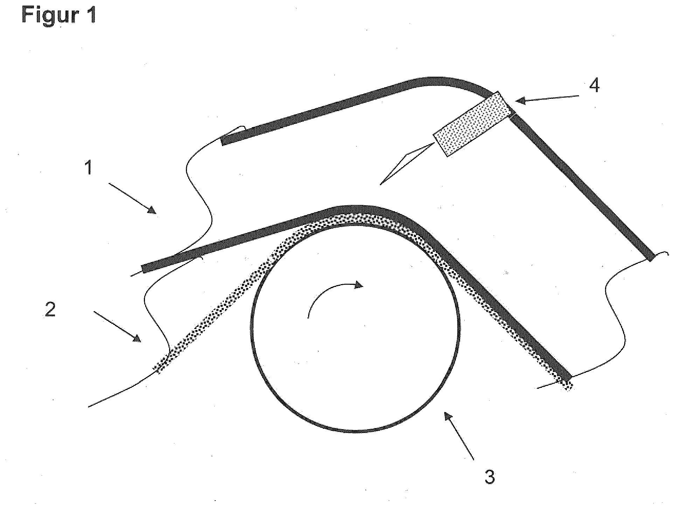

Figur 1 zeigt eine Schaumlage 2 und eine weitere funktionelle Lage 1. Die weitere funktionelle Lage 1 kann beispielsweise ein Gewebe sein. Dieses Gewebe liefert später in dem funktionalen Band unter anderem die gewünschte Dimensionsstabilität und Zugfestigkeit. Dieses Gewebe besteht in einer vorteilhaften Ausführung aus einem Multifilamentgewebe oder einem Monofilamentgewebe. Dabei können die Filamente aus einer Vielzahl von Polymeren bestehen. In einer vorteilhaften Ausführung besteht die weitere funktionelle Lage 1 aus einem Monofilamentgewebe aus Polyamid 6 mit Fadendurchmessern von 0.3 mm bis 0.5mm - vorzugsweise von 0.4 mm. Als Schaumlage 2 kann ein offenzelliger Polyurethanschaum zum Einsatz kommen. In der in Figur 1 gezeigten Ausführung ist die weitere funktionelle Lage 1 für das Licht des Lasers 4 transparent. Die Schaumlage 2 hingegen ist im Bereich der Laserwellenlänge absorbierend. Dies macht sich häufig in der Farbgebung der Schaumlage bemerkbar. So sind derartige Schaumlagen 2 üblicherweise anthrazit, schwarz oder grau. Die Schaumlage 2 wurde gegebenenfalls vorher bereits in einem weiteren Prozessschritt kompaktiert. Ist das funktionale Band für den Einsatz in einem Pressfilz für eine Papiermaschine vorgesehen, so hat das Schaumband 2 bei der Bereitstellung häufig eine Dicke im Bereich von 3mm bis 15 mm.
Die Schaumlage 2 und die weitere funktionelle Lage 1 werden zusammengeführt und gemeinsam über eine Walze 3 geführt. Durch das Aufbringen einer Bahnspannung und die Umschlingung der Walze 3 erfolgt ein Anpressen an die Walze 3, wodurch der gewünschte Fügedruck entsteht. Der Fügedruck beträgt in vielen Anwendungen zwischen 1 N/cm² und 5 N/cm². Über der Walze 3 ist ein Laser 4 angebracht. Er emittiert in einer vorteilhaften Ausführung Licht im NIR Bereich. Übliche Leistungen solcher Laser 4 liegen im Bereich von 100 W bis 600W (linienförmig). Es können jedoch prinzipiell auch Laser vorgesehen sein, die eine Fläche belichten. Der Laser 4 in Figur 1 hat eine Linienbreite von 30mm. Das Licht dringt durch die weitere funktionelle Lage 1 hindurch zur Grenzfläche mit der Schaumlage 2. Dort wird es von der Schaumlage absorbiert, wodurch es zu einer Erwärmung und einem Verschweißen der beiden Lagen kommt. Denkbar ist aber auch die Verwendung von flächigen Laserfeldern, die durch entsprechende Optiken erzeugt werden können.
In der Ausführung von Figur 1 werden Schaumlage 2 und weitere funktionelle Lage 1 unter dem Laserlicht durchgeführt. Die dabei verwendeten Geschwindigkeiten sind relativ gering - im Bereich zwischen 20 mm/s und 100 mm/s, können aber auch größer oder kleiner sein, je nach Material und Laser. Nach dem Verschweißen entsteht ein funktionales Band 7 mit einer Breite von 30mm. Breitere Bänder können beispielsweise dadurch hergestellt werden, indem man mehrere, nebeneinander angeordnete Laser verwendet, oder Laser mit breiten Linien. Außerdem kann die Schaumlage 2 und die weitere funktionelle Lage mehrfach, versetzt unter dem Laser 2 durchgefahren werden.

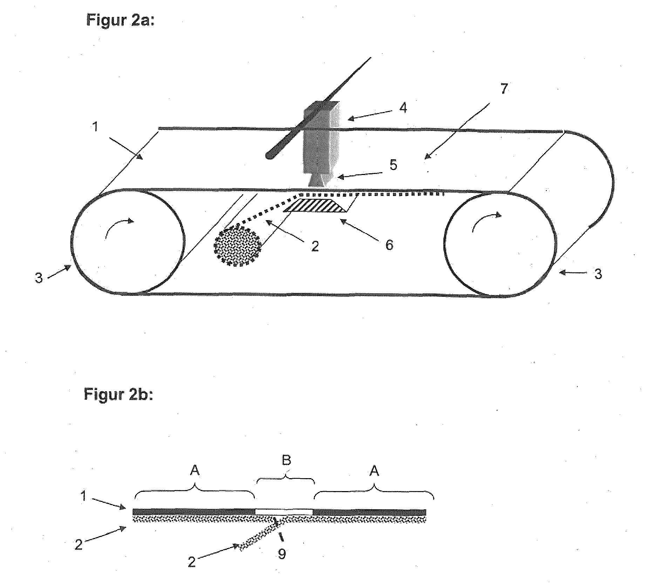

Figur 2 zeigt eine Ausführung des erfindungsgemäßen Verfahrens, in der der Laser 4 über der weiteren funktionellen Lage 1 und der Schaumlage 2 positioniert ist. In der dargestellten Ausführung wird eine endlose weitere funktionelle Lage 1 auf zwei Walzen 3 aufgespannt. Die Zugspannung beträgt hierbei üblicherweise weniger als 2 KN/m, speziell weniger als 1 KN/m. Eine Schaumlage 2, speziell ein offenzelliger Polyurethan Weichschaum, wird zwischen die weitere funktionelle Lage 1 und ein festes Element 6 eingebracht. Üblicherweise ist die Schaumlage absorbierend für NIR Licht ausgeführt. Solche Schaumlagen 2 erscheinen beim Betrachten häufig dunkel, z.B. anthrazit. Die Dicke der Schaumlage 2 liegt vorzugsweise im Bereich von 3mm und 15mm. Der benötigte Fügedruck wird in dieser Ausführung dadurch erzeugt, dass unter der Schaumlage ein festes Element 6, bevorzugt eine Polyamidplatte angebracht ist. Mittels einer Optik 5, speziell einer Rollenoptik 5, die am Laser 4 angebracht ist, wird Fügedruck auf die darunterliegenden Lagen 1,2 erzeugt. Die solcherart erzeugten Fügedrücke liegen -bezogen auf eine Rollenoptik mit 30 mm Breite -in bevorzugten Ausführungen zwischen 2 N und 10 N, wobei aber auch Drücke von 40N möglich sind. In besonders bevorzugen Ausführungen liegen die Fügedrücke zwischen 10N und 20N können aber im Einzelfall auch darüber oder darunter liegen, beispielsweise zwischen 4N und 6N. Wird eine andere Optik verwendet, z.B. eine breitere Rollenoptik, so können diese Druckwerte entsprechend angepasst werden. Die Leistung, die der Laser 4 erzeugt, liegt in bevorzugten Ausführungen zwischen 100 W und 500 W, kann aber auch bis zu 600 W oder mehr betragen. Besonders bevorzugt liegt die Laserleistung zwischen 200 W und 300W. Allerdings kann auch in speziellen Anwendungen eine größere oder kleinere Laserleistung vorgesehen sein. Auch diese Leistungsangaben sind wieder auf eine Rollenoptik mit 30 mm Breite bezogen, und können bei der Verwendung anderer Optiken entsprechend angepasst werden. So können beispielsweise bei einer 60 mm breiten Rollenoptik die doppelten Leistungswerte angewendet werden.
Bei der in Figur 2 gezeigten Ausführung sind Mittel vorgesehen, mittels derer der Laser 4 quer zur Laufrichtung der Lagen bewegt werden kann. So kann beispielsweise der Laser 4 an einer Traverse beweglich befestigt sein. Üblicherweise wird der Laser 4 mit einer Geschwindigkeit von weniger als 200 mm/s, bevorzugt weniger als 100 mm/s, besonders bevorzugt 40mm/s bis 60 mm/s bewegt. Während dieser Bewegung des Lasers können die weitere funktionelle Lage 1 und die Schaumlage 2 ruhen, oder sich auch entlang ihrer Bahnlaufrichtung bewegen. Durch die Bewegung des Lasers 4 wird in einem Streifen von der Breite der Optik 5 die weitere funktionelle Lage 1 mit der Schaumlage 2 verschweißt. In dem Fall, dass die weitere funktionelle Lage 1 und die Schaumlage 2 ruhen, entsteht so ein verschweißter Streifen, der quer zur Laufrichtung der Lagen orientiert ist. Bei der Verwendung üblicher Optiken sind die so erzeugten Streifen zwischen 20mm und 100mm; speziell zwischen 25mm und 40mm breit. Nach dem Verschweißen wird das Band 7 aus der mit der Schaumlage 2 verschweißten weiteren funktionellen Lage um die Breite des verschweißten Streifens weiter in Laufrichtung des Bandes vorwärts bewegt. Danach kann der Prozess des Schweißens wie oben beschrieben fortgesetzt werden. Zweckmäßigerweise wird der Laser 4 beim folgenden Schweißvorgang in entgegengesetzter Richtung über die Lage bewegt werden. Auf diese Weise kann, wenn es gewünscht wird, das komplette funktionale Band verschweißt werden.
Wie in Figur 2b gezeigt, kann die Schaumlage 2 an den Stoßstellen vor dem letzten Verschweißen, also vor dem letzten Traversieren des Lasers 4 mittels einer Schneidvorrichtung 9 so konfektioniert werden, dass ein sauberer Stoß entsteht. Der Bereich B der Stoßstelle ist hier noch nicht verschweißt, während die übrigen Bereiche A bereits wie oben beschrieben verschweißt worden sind. Der unverschweißte Bereich B kann dabei die Breite der Optik 5 des Lasers 4 haben, oder aber schmäler oder auch breiter sein.

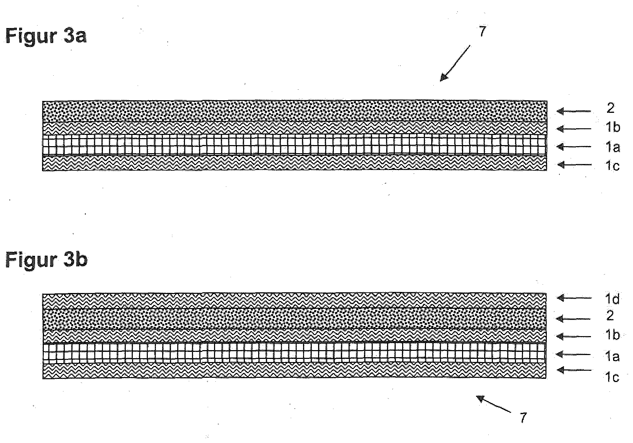

Figur 3a zeigt ein mögliches Beispiel für die Die Verwendung eines erfindungsgemäßen funktionalen Bandes 7 als technisches Textil, speziell als Pressfilz 7 für eine Papiermaschine, Der Filz 7 umfasst mehrere weitere funktionelle Lagen 1a, 1b, 1c, und zwar eine Tragstruktur 1a und auf beiden Seiten aufgenadelte Vlieslagen 1b, 1c. Die Tragstruktur 1a kann beispielsweise aus einem Gewebe, einem Gewirke, einem Gelege, bestehen oder dieses umfassen.
Weiterhin ist in Figur 3a papierseitig eine Schaumlage 2, insbesondere eine elastische offenporige Schaumlage 2 vorgesehen, welche erfindungsgemäß durch Laser Transmissionsschweißen mit der papierseitigen Vlieslage 1b verbunden wird. Dazu ist der Schaum vorteilhafterweise als zumindest an seiner Oberfläche für Licht im Bereich der Laserwellenlänge weitgehend absorbierende Lage ausgeführt. Das Laserlicht kann bei der Herstellung beispielsweise unter Fügedruck aus Richtung der Laufseite durch die Filzstruktur gelenkt werden. In diesem Fall können die Tragstruktur 1a sowie die Vlieslage bzw. Vlieslagen 1b, 1c für Licht im Bereich der Laserwellenlänge weitgehend transparent ausgeführt sein.
Ein solcher Pressfilz 7 hat an seiner papierberührenden Oberfläche eine Schaumlage 2. Generell können Filze 7 mit einer solchen Schaumlage 2 als papierberührenden Oberfläche vorteilhaft sein, da diese eine geringe Markierungsneigung aufweisen, da im Gegensatz zu papierberührenden Vlieslagen keine Vliesfasern in die Papieroberfläche eingedrückt werden können. Zudem können trotz der vergleichsweise glatten Oberfläche der Schaumlagen bei der Verwendung entsprechende Schäume hohe Permeabilitäten erzielt werden. Dies kann für die Entwässerung der Papierbahn von großem Vorteil sein.
Um die Schaumlage 2 zu kompaktieren und zu verfestigen kann vorgesehen sein, dass ein Pressfilz wie der oben beschriebene insbesondere nach dem Verschweißen der Schaumlage 2 mit der papierseitigen Vlieslage 1b über eine heiße Walze geführt wird. Eine solche Walze wird vorzugsweise bei Temperaturen zwischen 100°C und 250°C betrieben, besonders bevorzugt zwischen 160° C und 210°C. Durch diese Behandlung wird die Oberfläche der Schaumlage 2 auch geglättet.

Als Schaum für einen derartigen Filz, aber auch für andere, erfindungsgemäße funktionale Bänder können bevorzugt offenporige Polyurethan Weichschäume bzw. Filterschäume zum Einsatz kommen mit einer Porosität von beispielsweise 30-60 PPI und einer Dicke von 2 bis 12mm, insbesondere 3-8 mm. Diese Dicke kann gegebenenfalls durch einen Kompaktierungsprozess noch reduziert werden, so dass die Schaumlage im fertigen Produkt eine geringere Dicke aufweist.

Figur 3b zeigt eine weitere vorteilhafte Verwendung des ein funktionales Bandes 7 mit mehreren weiteren funktionellen Lagen 1a, 1b, 1c, 1d als Pressfilz 7. Hier ist eine Tragstruktur 2 vorgesehen, auf deren papierseitiger Oberfläche eine oder mehrere Vlieslagen 1b vorzugsweise durch Vernadelung angebracht sind. Auf der Oberfläche der obersten Vlieslage 1b kann nun wiederum eine Schaumlage 2 durch Transmissionsschweißen befestigt sein. Dabei ist vorzugsweise die Schaumlage 2 für Licht im Bereich der Laserwellenlänge weitgehend absorbierend ausgeführt. Auf der papierseitigen Oberfläche der Schaumlage 2 ist in Figur 3b eine Vlieslage 1d als weitere funktionelle Lage vorgesehen, welche dann die papierberührende Oberseite des Filzes 7 bereitstellt. Diese Vlieslage 1d kann entweder konventionell durch Vernadelung befestigt werden. In besonders vorteilhaften Ausführungen kann diese papierberührende Vlieslage 1d allerdings auch wieder mittels Lasertransmissionsschweißen auf der Schaumlage 2 befestigt sein. In dieser Ausführung werden dann also auf beiden Seiten der Schaumlage 2 Vlieslagen 1b, 1d durch Schweißen befestigt. Dies ist möglich, wenn die weiteren funktionellen Lagen 1a, 1b, 1c, 1d, für Licht im Bereich der Laserwellenlänge weitgehend transparent ausgeführt sind, während die Schaumlage 2 in diesem Bereich absorbierend ausgeführt ist.
Auch bei dieser Ausführung kann die Schaumlage 2 wieder durch Wärme und Druck kompaktiert und verfestigt werden, wobei dieses Kompaktieren vor und/oder nach dem ersten und/oder zweiten Verschweißen erfolgen kann
Das funktionale Band in Figur 3b weist auf der papierabgewandten Seite der Tragstruktur 1a eine weitere Vlieslage 1c auf. Je nach Anwendungsfall kann auf diese Vlieslage 1c auch verzichtet werden. Alternativ kann können aber auch noch weitere Vlieslage vorgesehen sein.

### Bezugszeichen

- 1,1a,1b,1c,1d: weitere funktionelle Lage
- 2: Schaumlage
- 3: Walze
- 4: Laser
- 5: Optik
- 6: festes Element
- 7: funktionales Band
- 9: Schnitt
- A: verschweißter Bereich
- B: unverschweißter Bereich

## Patentansprüche

1. Funktionales Band (7) mit einer Längenrichtung und einer Breitenrichtung umfassend eine Schaumlage (2) sowie zumindest eine weitere funktionelle Lage (1) **dadurch gekennzeichnet, dass** die Schaumlage (2) und die weitere funktionelle Lage (1) durch Lasertransmissionsschweißen, insbesondere mittels NIR Lasertransmissionsschweißen, bei dem Laser mit einer Wellenlänge im Bereich von 780nm-1100nm eingesetzt werden, miteinander verbunden sind.

2. Funktionales Band (7) gemäß Anspruch 1, **dadurch gekennzeichnet, dass** die Schaumlage (2) einen Polymerschaum umfasst oder daraus besteht.

3. Funktionales Band (7) gemäß Anspruch 2, **dadurch gekennzeichnet, dass** der Polymerschaum ein Elastomer, insbesondere ein Polyurethan umfasst.

4. Funktionales Band (7) gemäß einem der vorherigen Ansprüche, **dadurch gekennzeichnet, dass** die Schaumlage (2) einen offenporigen Polymerschaum und/oder einen geschlossenzelligen Polymerschaum umfasst.

5. Funktionales Band (7) gemäß einem der vorherigen Ansprüche, **dadurch gekennzeichnet, dass** die zumindest eine weitere funktionelle Lage (1) aus einem Gewebe, einem Gewirke, einem Gelege, einem Vlies, einer Folie oder einem Polymerschaum besteht oder dieses umfasst.

6. Funktionales Band (7) gemäß einem der vorherigen Ansprüche, **dadurch gekennzeichnet, dass** entweder die Schaumlage (2) oder die weitere funktionelle Lage (1) als für Licht im Bereich der Wellenlängen 900nm - 1100 nm, insbesondere 1060nm- 1090nm weitgehend transparente Lage ausgeführt ist, während die jeweils andere Lage als zumindest an einer Oberfläche für Licht im Bereich dieser Wellenlängen weitgehend absorbierende Lage ausgeführt ist.

7. Funktionales Band (7) gemäß Anspruch 6, **dadurch gekennzeichnet, dass** die absorbierende Lage einen Absorber insbesondere einen Farbstoff, Tinte oder Ruß umfasst, welcher Licht im Bereich der Wellenlängen 900 nm - 1100 nm, insbesondere 1060nm- 1090nm absorbiert.

8. Funktionales Band (7) gemäß Anspruch 7, **dadurch gekennzeichnet, dass** der Absorber in das Volumen der absorbierenden Lage eingebracht oder auf zumindest eine ihrer Oberfläche aufgebracht ist.

9. Funktionales Band (7) gemäß einem der vorherigen Ansprüche, **dadurch gekennzeichnet, dass** das funktionale Band (7) als Rollenware, als endlose Schlaufe oder mit einer verschließbaren Naht ausgeführt ist.

10. Funktionales Band (7) gemäß einem der vorherigen Ansprüche, **dadurch gekennzeichnet, dass** die Schaumlage (2) aus mehreren einzelnen Schaumelementen gebildet ist oder diese umfasst, die in Längenrichtung und/oder Breitenrichtung vorzugsweise auf Stoß nebeneinander angeordnet sind.

11. Verfahren zur Herstellung eines funktionalen Bandes, aufweisend die folgenden Prozessschritte:
i) Bereitstellen einer kompressiblen Schaumlage (2)
ii) Bereitstellen einer weiteren funktionellen Lage (1)
iii) Zusammenführen der Schaumlage (2) und der weiteren funktionellen Lage (1)
**dadurch gekennzeichnet, dass** das Verfahren zudem noch den folgenden Prozessschritt aufweist:
iv) Verbinden der kompressiblen Schaumlage (2) mit der weiteren funktionellen Lage durch Lasertransmissionsschweißen, insbesondere mittels NIR Lasertransmissionsschweißen, bei dem Laser mit einer Wellenlänge im Bereich von 780nm-1100nm eingesetzt werden.

12. Verfahren gemäß Anspruch 11, **dadurch gekennzeichnet, dass** die beiden Lagen unter einem Fügedruck aufeinandergelegt und verschweißt werden.

13. Verfahren gemäß einem der Ansprüche 11 oder 12, **dadurch gekennzeichnet, dass** das Verfahren zumindest einen weiteren Prozessschritt aufweist, in dem die Schaumlage (2) unter Einfluss von Druck und Temperatur zumindest teilweise kompaktiert wird, wobei dieses Kompaktieren vor und/oder nach dem Verschweißen erfolgen kann.

14. Verfahren gemäß Anspruch 13, **dadurch gekennzeichnet, dass** die Schaumlage (2) nach dem Kompaktieren unter Druck abgekühlt wird.

15. Verwendung eines funktionalen Bandes (7) gemäß einem der Ansprüche 1 bis 10 als technisches Textil, insbesondere als Bespannung zur Verwendung in einer Maschine zur Herstellung oder Verarbeitung einer Faserstoffbahn - vorzugsweise als Pressfilz einer Papiermaschine - als ein Dichtband oder als ein textilbewehrtes Dämmmaterial, oder als Bestandteil eines solchen technischen Textils.

## Claims

1. Functional belt (7) having a length direction and a width direction comprising a foam layer (2) and at least one further functional layer (1), **characterized in that** the foam layer (2) and the further functional layer (1) are joined to one another by laser transmission welding, in particular by means of NIR laser transmission welding, in which lasers having a wavelength in the range of 780nm-1100nm are used.

2. Functional belt (7) according to claim 1, **characterized in that** the foam layer (2) comprises or consists of a polymer foam.

3. Functional belt (7) according to claim 2, **characterized in that** the polymer foam comprises an elastomer, in particular a polyurethane.

4. Functional belt (7) according to any one of the preceding claims, **characterized in that** the foam layer (2) comprises an open-cell polymer foam and/or a closed-cell polymer foam.

5. Functional belt (7) according to one of the previous claims, **characterized in that** the at least one further functional layer (1) comprises or consists of a woven fabric, a knitted fabric, a scrim, a nonwoven fabric, a film or a polymer foam.

6. Functional belt (7) according to one of the previous claims, **characterized in that** either the foam layer (2) or the further functional layer (1) is designed as a layer largely transparent to light in the range of wavelengths 900 nm - 1100 nm, in particular 1060 nm - 1090 nm, while the other layer in each case is designed as a layer largely absorbing, at least on one surface, light in the range of these wavelengths.

7. Functional belt (7) according to claim 6, **characterized in that** the absorbing layer comprises an absorber, in particular a dye, ink or carbon black, which absorbs light in the range of wavelengths 900 nm - 1100 nm, in particular 1060nm- 1090nm.

8. Functional belt (7) according to claim 7, **characterized in that** the absorber is introduced into the volume of the absorbing layer or is applied to at least one of its surfaces.

9. Functional belt (7) according to any one of the preceding claims, **characterized in that** the functional belt (7) is designed as a roll material, as an endless loop or with a closable seam.

10. Functional belt (7) according to one of the preceding claims, **characterized in that** the foam layer (2) is formed from or comprises a plurality of individual foam elements which are arranged next to one another in the length direction and/or width direction, preferably abutting one another.

11. Method for producing a functional belt, comprising the following process steps:
i) providing a compressible foam layer (2)
ii) providing a further functional layer (1)
iii) bringing together the foam layer (2) and the further functional layer (1)
**characterized in that** the method further comprises the following process step:
iv) joining the compressible foam layer (2) to the further functional layer by laser transmission welding, in particular by means of NIR laser transmission welding, in which lasers with a wavelength in the range of 780nm-1100nm are used.

12. Process according to claim 11, **characterized in that** the two layers are placed one on top of the other under a joining pressure and welded.

13. Method according to one of claims 11 or 12, **characterized in that** the method comprises at least one further process step in which the foam layer (2) is at least partially compacted under the influence of pressure and temperature, it being possible for this compacting to take place before and/or after welding.

14. Process according to claim 13, **characterized in that** the foam layer (2) is cooled under pressure after compacting.

15. Use of a functional belt (7) according to any one of claims 1 to 10 as a technical textile, in particular as a covering for use in a machine for producing or processing a fibrous web - preferably as a press felt of a paper machine - as a sealing belt or as a textile-reinforced insulating material, or as a component of such a technical textile.

## Revendications

1. Ruban fonctionnel (7) ayant une direction de longueur et une direction de largeur comprenant une couche de mousse (2) et au moins une autre couche fonctionnelle (1), **caractérisé en ce que** la couche de mousse (2) et l'autre couche fonctionnelle (1) sont reliées l'une à l'autre par un soudage par transmission laser, en particulier au moyen d'un soudage par transmission laser NIR, dans lequel des lasers ayant une longueur d'onde dans la plage de 780nm-1100nm sont utilisés.

2. Bande fonctionnelle (7) selon la revendication 1, **caractérisée en ce que** la couche de mousse (2) comprend ou consiste en une mousse polymère.

3. Ruban fonctionnel (7) selon la revendication 2, **caractérisé en ce que** la mousse polymère comprend un élastomère, en particulier un polyuréthane.

4. Bande fonctionnelle (7) selon l'une quelconque des revendications précédentes, **caractérisée en ce que** la couche de mousse (2) comprend une mousse polymère à cellules ouvertes et/ou une mousse polymère à cellules fermées.

5. Ruban fonctionnel (7) selon l'une quelconque des revendications précédentes, **caractérisé en ce que** la au moins une autre couche fonctionnelle (1) comprend ou est constituée d'un tissu, d'un tricot, d'un canevas, d'un tissu non tissé, d'un film ou d'une mousse polymère.

6. Ruban fonctionnel (7) selon l'une des revendications précédentes, **caractérisé en ce que** soit la couche de mousse (2), soit l'autre couche fonctionnelle (1) est conçue comme une couche qui est largement transparente à la lumière dans la plage des longueurs d'onde 900 nm - 1100 nm, en particulier 1060 nm - 1090 nm, tandis que l'autre couche est conçue comme une couche qui absorbe largement la lumière dans la plage de ces longueurs d'onde, au moins sur une surface.

7. Ruban fonctionnel (7) selon la revendication 6, **caractérisé en ce que** la couche absorbante comprend un absorbeur, en particulier un colorant, une encre ou du noir de carbone, qui absorbe la lumière dans la gamme de longueurs d'onde 900 nm - 1100 nm, en particulier 1060nm- 1090nm.

8. Ruban fonctionnel (7) selon la revendication 7, **caractérisé en ce que** l'absorbeur est introduit dans le volume de la couche absorbante ou est appliqué sur au moins une de ses surfaces.

9. Ruban fonctionnel (7) selon l'une quelconque des revendications précédentes, **caractérisé en ce que** le ruban fonctionnel (7) se présente sous la forme d'un rouleau, d'une boucle sans fin ou d'une couture fermable.

10. Ceinture fonctionnelle (7) selon l'une quelconque des revendications précédentes, **caractérisée en ce que** la couche de mousse (2) est formée de ou comprend une pluralité d'éléments de mousse individuels disposés côte à côte, de préférence bout à bout, dans le sens de la longueur et/ou de la largeur.

11. Procédé de fabrication d'une bande fonctionnelle, comprenant les étapes de procédé suivantes :
i) fournir une couche de mousse compressible (2)
ii) fournir une autre couche fonctionnelle (1)
iii) réunir la couche de mousse (2) et la couche fonctionnelle supplémentaire (1)
**caractérisé en ce que** le procédé comprend en outre l'étape de traitement suivante :
(iv) la liaison de la couche de mousse compressible (2) à l'autre couche fonctionnelle par soudage par transmission laser, en particulier par soudage par transmission laser NIR, dans lequel on utilise des lasers ayant une longueur d'onde dans la plage de 780 nm à 1100 nm.

12. Procédé selon la revendication 11, **caractérisé en ce que** les deux couches sont placées l'une sur l'autre sous une pression d'assemblage et soudées.

13. Procédé selon l'une quelconque des revendications 11 ou 12, **caractérisé en ce que** le procédé comprend au moins une autre étape de traitement dans laquelle la couche de mousse (2) est au moins partiellement compactée sous l'influence de la pression et de la température, ce compactage pouvant avoir lieu avant et/ou après le soudage.

14. Procédé selon la revendication 13, **caractérisé en ce que** la couche de mousse (2) est refroidie sous pression après le compactage.

15. Utilisation d'un ruban fonctionnel (7) selon l'une quelconque des revendications 1 à 10 comme textile technique, en particulier comme revêtement destiné à être utilisé dans une machine de production ou de traitement d'une bande fibreuse - de préférence comme feutre de presse d'une machine à papier - comme ruban d'étanchéité ou comme matériau isolant renforcé par du textile, ou comme composant d'un tel textile technique.
